# EUROPÄISCHE PATENTSCHRIFT

(11) **EP 2 389 304 B1**
(45) Veröffentlichungstag und Bekanntmachung des Hinweises auf die Patenterteilung: **12.03.2014**
(21) Anmeldenummer: 10704334.1
(22) Anmeldetag: 20.01.2010
(51) Int. Cl.: B60R 21/233, B60R 21/239

(54) **GASSACK FÜR EIN FAHRZEUGINSASSEN-RÜCKHALTESYSTEM UND VERFAHREN ZUM HERSTELLEN EINES GASSACKS**
AIRBAG FOR A VEHICLE OCCUPANT RESTRAINT SYSTEM AND METHOD FOR PRODUCING AN AIRBAG
SAC GONFLABLE POUR UN SYSTÈME DE RETENUE DES PASSAGERS D'UN VÉHICULE ET PROCÉDÉ DE PRODUCTION D'UNE SAC GONFLABLE

(30) Priorität: 21.01.2009 DE 102009005834
(43) Veröffentlichungstag der Anmeldung: 30.11.2011
(73) Patentinhaber: Takata AG, 63743 Aschaffenburg (DE)
(72) Erfinder: FELLER, Jens, 89171 Illerkirchberg (DE); SCHMIDT, Torsten, 13055 Berlin (DE)
(74) Vertreter: Staroske, Sandro
(86) Internationale Anmeldenummer: PCT/EP2010/050632
(87) Internationale Veröffentlichungsnummer: WO 2010/084128

(56) Entgegenhaltungen:
- EP-A1- 1 595 751
- WO-A1-03/057540
- DE-A1-102005 034 250
- DE-A1-102008 030 188

## Beschreibung

Die Erfindung betrifft einen Gassack für ein Fahrzeuginsassen-Rückhaltesystem gemäß dem Oberbegriff des Anspruchs 1 und gemäß dem Oberbegriff des Anspruchs 12 sowie ein Verfahren zum Herstellen eines Gassacks gemäß Anspruch 14.

Ein Gassack gemäß dem Oberbegriff der Ansprüche 1 und 12 ist beispielsweise aus der WO 03/057540 A1 und DE 10 2005 034 250 A1 bekannt.

Das von der Erfindung zu lösende Problem besteht darin, einen Gassack zu schaffen, dessen Kammern mit unterschiedlichen Innendrücken befüllbar sind und der auf möglichst einfache Weise herstellbar ist.

Dieses Problem wird durch den Gassack mit den Merkmalen gemäß Anspruch 1 und 12 sowie durch das Verfahren mit den Merkmalen gemäß Anspruch 14 gelöst.

Danach wird ein Gassack für ein Fahrzeuginsassen-Rückhaltesystem bereitgestellt, mit
- einer ersten und einer zweiten Kammer, die zum Schutz eines Fahrzeuginsassen aufblasbar sind;
- einem Ausströmelement mit einem Ausströmkanal, über den das Gas aus der ersten Kammer ausströmen kann, wenn der Innendruck in der ersten Kammer den Innendruck in der zweiten Kammer übersteigt, und der unter Einwirkung des Innendruckes in der zweiten Kammer zusammengedrückt werden kann, so dass einem Ausströmen von Gas aus der zweiten Kammer entgegengewirkt wird, wenn der Innendruck in der ersten Kammer niedriger ist als der Innendruck in der zweiten Kammer, wobei
   das Ausströmelement ein doppellagiges Materialstück aufweist und der Ausströmkanal durch Einstülpen eines Abschnitts des Materialstücks zwischen die Materiallagen des Materialstücks gebildet ist.

Übersteigt bei oder nach Befüllen des Gassacks (per Gasgenerator) der Innendruck in der zweiten Kammer den Innendruck in der ersten Kammer, verringert sich also der Ausströmquerschnitt des Ausströmkanals. Somit kann beispielsweise bei Aufprall des Fahrzeuginsassen und einem mit dem Aufprall verbundenen Anstieg des Innendrucks in der zweiten Kammer ein Entweichen von Gas aus der zweiten Kammer vermieden werden.

Das Ausströmelement besteht insbesondere aus einer Materiallage oder aus mehreren Materiallagen, die zum Beispiel aus einem Gewebe (insbesondere aus einem Gassackmaterial) gebildet sind. Ein derartiges Ausströmelement kann in einfacher Weise hergestellt und mit mindestens einer Gassacklage, die die erste und die zweite Kammer des Gassacks begrenzt, verbunden werden, zum Beispiel durch Vernähen oder Verkleben.

Des Weiteren ist das Ausströmelement insbesondere ein getrennt von der Gassacklage des Gassacks gefertigtes Element (zum Beispiel ein Gewebestück), das im Inneren des Gassacks angeordnet und mit der einen Gassacklage oder der mehreren Gassacklagen verbunden ist. Das Ausströmelement ist z.B. so angeordnet, dass es sich in die zweite Kammer hinein erstreckt.

In einer anderen Variante der Erfindung weist das doppellagige Materialstück (z.B. ein doppellagiges Gassackmaterial oder ein sonstiges doppellagiges Flachstück) eine Faltkante auf und der Ausströmkanal ist durch Einstülpen einer Ecke, die sich zwischen der Faltkante und einem Seitenrand des Materialstücks befindet, gebildet. Allerdings muss nicht unbedingt eine scharfe Faltkante vorhanden sein, sondern das Materialstück kann z.B. entlang der Faltlinie lediglich umgebogen sein. Auch muss nicht notwendigerweise eine scharfe Ecke vorhanden sein. Es ist auch denkbar, dass ein Abschnitt des Materialbereichs eingestülpt wird, der sich in einem Bereich erstreckt, in dem die Faltlinie auf einen in diesem Bereich beispielsweise gekrümmten Seitenrand des Materialstücks trifft.

In einer anderen Ausgestaltung der Erfindung umfasst das Ausströmelement einen ersten Abschnitt, der die erste von der zweiten Kammer trennt, und einen zweiten Abschnitt, der den Ausströmkanal aufweist. Beispielsweise ist der erste Abschnitt des Ausströmelementes einstückig mit dem zweiten Abschnitt des Ausströmelementes verbunden.

Das Ausströmelement bildet gemäß dieser Variante somit einerseits ein Trennmittel (zum Beispiel in Form einer Trennwand), das die erste von der zweiten Kammer des Gassacks zumindest abschnittsweise (insbesondere auch gasdicht) trennt. Gleichzeitig bildet das Ausströmelement den Ausströmkanal aus, der druckabhängig eine Ausströmöffnung, über die Gas aus der ersten Kammer abströmen kann, freigibt.

In einer weiteren Variante der Erfindung ist der Ausströmkanal so ausgebildet und angeordnet, dass über Ihn Gas aus der ersten Kammer aus dem Gassack ausströmen kann. In dieser Variante wird somit die Möglichkeit geschaffen, dass Gas aus der ersten Kammer in Abhängigkeit von der Druckdifferenz zwischen der ersten und der zweiten Kammer aus dem Gassack in die Umgebung abgeströmt werden kann; insbesondere um den Innendruck in der ersten Kammer zu regulieren.

In einer anderen Ausgestaltung ist der Ausströmkanal so ausgebildet und angeordnet, dass über Ihn Gas aus der ersten Kammer in die zweite Kammer überströmen kann. In dieser Variante wirkt der zweite Abschnitt des Ausströmelementes, der den Ausströmkanal bildet, als Rückschlagventil, das insbesondere ein Abströmen von Gas aus der zweiten Kammer verhindert, wenn dort der Innendruck ansteigt.

In einer Weiterbildung weist die erste Kammer eine zusätzliche Ausströmöffnung auf, über die Gas aus der ersten Kammer in die Umgebung abströmen kann, so dass der Innendruck in der ersten Kammer abnimmt. Durch den blockierenden Ausströmkanal wird bei abnehmendem Innendruck in der ersten Kammer jedoch ein Rückströmen von Gas aus der zweiten in die erste Kammer verhindert.

Es ist auch möglich, dass sich ein Abschnitt des Ausströmelementes so zwischen einer Ausströmöffnung der ersten Kammer und der zweiten Kammer erstreckt, dass der Abschnitt durch den Innendruck in der zweiten Kammer gegen die Ausströmöffnung gedrückt wird und diese blockiert, wenn der Innendruck in der zweiten Kammer den Innendruck in der ersten Kammer übersteigt.

Des Weiteren kann der Gassack eine erste und zweite Gassacklage aufweisen, die die erste und die zweite Kammer begrenzen, wobei eine der Materiallagen des Materialstücks mit der ersten Gassacklage und die andere Materiallage des Materialstücks mit der zweiten Gassacklage verbunden ist.

In einer Abwandlung weist das Ausströmelement einen dreieckigen Bereich auf, der den Ausströmkanal begrenzt. Zudem kann der Ausströmkanal zwei Ausströmöffnungen umfassen, die sich entlang der Achse des Ausströmkanals einander gegenüber liegen, wobei die der ersten Kammer zugewandte Ausströmöffnung schräg zur Achse des Ausströmkanals verläuft. Insbesondere verläuft die der ersten Kammer zugewandte Ausströmöffnung abgewinkelt zu einem ersten Abschnitt des Ausströmelementes, der die ersten und die zweite Kammer voneinander trennt.

Gemäß einer anderen Ausgestaltung ist das Ausströmelement bandförmig gestaltet, wobei mindestens ein Ende des Bandes einen Ausströmkanal ausformt.

Es wird darauf hingewiesen, dass das Ausströmelement auch mehrere (insbesondere voneinander beanstandete) Ausströmkanäle ausbilden kann, die die Kammern des Gassacks z.B. an unterschiedlichen Positionen miteinander in Strömungsverbindung bringen. Beispielsweise können mehrere Ausströmkanäle auch durch eine Naht, die in Strömungsrichtung verläuft und die einen Ausströmbereich zwischen zwei Materiallagen des Ausströmelementes in mehrere Sektionen unterteilt, gebildet sein.

Zudem versteht sich, dass der Gassack auch mehr als zwei Kammern aufweisen kann und z.B. zwischen zwei der Kammern zumindest ein Ausströmelement vorhanden ist.

Des Weiteren sei erwähnt, dass der Begriff "Ausströmkanal" nicht unbedingt bedeutet, dass dieser zwingend eine in Strömungsrichtung längliche Geometrie aufweisen muss, vielmehr erfasst die Erfindung auch Ausströmkanäle, deren Abmessung quer zur Strömungsrichtung größer ist als in Strömungsrichtung.

In einer anderen Weiterbildung der Erfindung ist durch den Ausströmkanal des Ausströmelementes ein Bauteil eines Gassackmoduls hindurchgeführt, beispielsweise eine elektrische Leitung, ein Gasgenerator oder ein Befestigungselement (zum Beispiel ein Bolzen). Durch die Einwirkung des Innendruckes im Gassack und das Zusammendrücken des Ausströmkanals wird insbesondere eine Abdichtung des durch den Kanal hindurch geführten Bauteiles realisiert.

In einem zweiten Aspekt der Erfindung wird ein Gassack für ein Fahrzeuginsassen-Rückhaltesystem bereitgestellt, mit
- einer ersten und einer zweiten Kammer, die zum Schutz eines Fahrzeuginsassen aufblasbar sind;
- einem Ausströmelement, über das Gas aus der ersten Kammer ausströmen kann, wenn der Innendruck in der ersten Kammer den Innendruck in der zweiten Kammer übersteigt, und das ein Ausströmen von Gas aus der ersten Kammer blockiert, wenn der Innendruck in der ersten Kammer niedriger ist als der Innendruck in der zweiten Kammer, wobei
- das Ausströmelement mit einem ersten Abschnitt die erste von der zweiten Kammer trennt und mit einem zweiten Abschnitt mindestens einen Ausströmkanal bildet, der unter Einwirken des Innendrucks in der zweiten Kammer zusammengedrückt wird, wenn der Innendruck in der zweiten Kammer größer ist als der Innendruck in der ersten Kammer.

Gemäß einer Weiterbildung ist der Ausströmkanal zwischen dem zweiten Abschnitt und einer Gassacklage, die die erste und/oder die zweite Kammer des Gassacks begrenzt, gebildet. Insbesondere ist das Ausströmelement im Bereich seines zweiten Abschnittes entlang seiner Seitenränder mit der Gassacklage verbunden.

Die Erfindung betrifft des Weiteren ein Verfahren zum Herstellen eines Gassacks für ein Fahrzeuginsassen-Rückhaltesystem, insbesondere zum Herstellen eines wie oben beschriebenen Gassackes. Das Verfahren weist Schritte auf
- Bereitstellen mindestens einer Gassacklage zum Herstellen einer ersten und einer zweiten aufblasbaren Kammer;
- Anordnen eines Ausströmelementes an der Gassacklage, das unter Einwirken des Innendrucks in der zweiten Kammer zusammengedrückt wird, wenn der Innendruck in der zweiten Kammer größer ist als der Innendruck in der ersten Kammer, wobei
- das Herstellen des Ausströmelementes die folgenden Schritte umfasst:
- Bereitstellen eines doppellagigen Materialstücks;
- Einstülpen mindestens eines Abschnitts des Materialstücks zwischen die beiden Materiallagen, um den Ausströmkanal zu bilden.

In einer Weiterbildung des Verfahrens umfasst das Herstellen des Ausströmelementes die folgenden Schritte:
- Falten (oder Umbiegen) eines Ausgangsmaterialstücks, so dass ein doppellagiges Materialstück, entsteht, das der an den Enden der entlang der Faltlinie entstandenen Faltkante jeweils eine Ecke aufweist;
- Einstülpen mindestens einer der Ecken zwischen die beiden Materiallagen des doppellagigen Materialstücks.

Beim Einstülpen der Ecke an einem Ende der Faltlinie wird diese gewissermaßen nach Innen umgeklappt, das heißt in diesem Bereich wird eine Außenseite des Materialzuschnittes so zwischen die beiden Lagen des Teilbereiches gebracht, dass sie nach dem Einstülpen eine Innenseite des Ausströmkanals bildet.

Insbesondere wird das doppellagige Materialstück vor dem Einstülpen an der Gassacklage befestigt. Beispielsweise kann das Ausströmelement - wie oben bereits erwähnt - einen ersten Abschnitt, der zur Trennung der beiden Kammern dient, und einen zweiten Abschnitt, der den Ausströmkanal ausbildet, aufweisen. Ein derartiges Ausströmelement kann z.B. im Bereich des ersten Abschnitts mit der Gassacklage des Gassacks verbunden werden, bevor das Umstülpen eines Bereiches des zweiten Abschnitts erfolgt.

In einer Variante weist der gefaltete Materialzuschnitt einen doppellagigen, näherungsweise rechteckigen Grundbereich auf. Insbesondere wird ein Bereich um eine Ecke dieses rechteckigen Grundbereiches über einen Seitenrand der Grundstruktur hinaus eingestülpt, das heißt der durch das Einstülpen gebildete Ausströmkanal ragt über die rechteckige Struktur hinaus. Insbesondere entsteht ein Ausströmelement, das einen Ausströmkanal aufweist, der sich abgewinkelt (insbesondere quer) zum Rest des Materialzuschnittes, der den "ersten Abschnitt" des Ausströmelementes bildet, erstreckt.

Die Erfindung wird im Folgenden anhand von Ausführungsbeispielen unter Bezugnahme auf die Figuren näher erläutert. Es zeigen:
- Figuren 1 A bis 1C: einen Ausschnitt eines Gassacks gemäß einem ersten Ausführungsbeispiel der Erfindung;
- Figuren 2A bis 2C: Schritte bei der Herstellung eines Ausströmelementes für den erfindungsgemäßen Gassack;
- Figur 3: einen Ausschnitt aus einem Gassack gemäß einem zweiten Ausführungsbeispiel der Erfindung;
- Figur 4: einen Ausschnitt aus einem Gassack gemäß einem dritten Ausführungsbeispiel der Erfindung;
- Figuren 5A bis 5C: Schritte bei der Herstellung eines Ausströmelementes gemäß einer weiteren Variante des erfindungsgemäßen Gassacks;
- Figur 5D: eine Abwandlung des Ausströmelementes der Figuren 5A bis 5C;
- Figuren 6A und 6B: eine weitere Ausführungsform des erfindungsgemäßen Gassackes; und
- Figuren 7A bis 7C: eine weitere Ausführungsform des erfindungsgemäßen Gassackes.

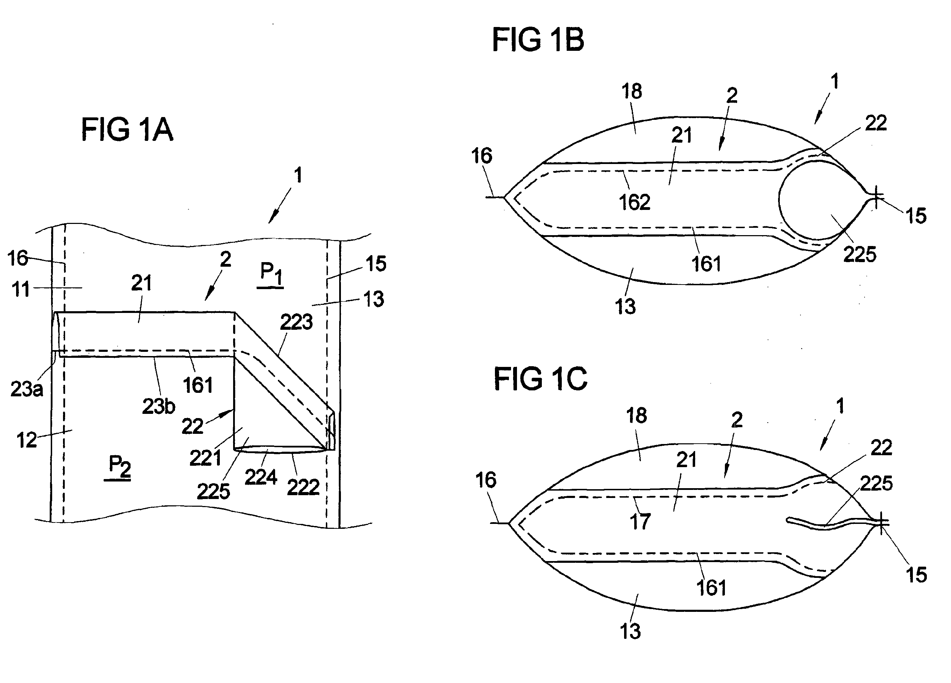

Figur 1A zeigt das Innere eines erfindungsgemäßen Gassacks 1, der eine erste Kammer 11 und eine zweite Kammer 12 aufweist. Der Gassack 1 umfasst zudem eine erste Gassacklage 13 und eine zweite Gassacklage (nicht dargestellt), die die erste und die zweite Kammer 11, 12 begrenzen. Die beiden Gassacklagen sind über Nähte 15, 16 miteinander verbunden.

Zwischen der ersten und der zweiten Kammer 11, 12 ist ein Ausströmelement in Form eines Bandes 2 (zum Beispiel in Form eines Gassack-Fangbandes) angeordnet. Das Band 2 weist einen ersten Abschnitt 21 auf, der zwischen der ersten und der zweiten Kammer 11, 12 angeordnet ist und diese voneinander trennt. Darüber hinaus weist das Band 2 einen zweiten (mit dem ersten Abschnitt 21 einstückig verbundenen) Abschnitt 22 auf, der eine innendruckabhängige Strömungsverbindung zwischen der ersten und der zweiten Kammer realisiert.

Der erste Abschnitt 21 des Bandes 2 ist gebogen (gefaltet), so dass er einander gegenüber liegende Längsseiten 23a und 23b aufweist, die jeweils mit der Innenseite der ersten Gassacklage 13 (über eine Naht 16) bzw. der zweiten Gassacklage verbunden sind. Somit erstreckt sich der erste Abschnitt 21 des Bandes 2 zwischen den Gassacklagen des Gassacks und sorgt für eine im Wesentlichen gasdichte Abtrennung der ersten von der zweiten Kammer in diesem Bereich.

Der zweite Abschnitt 22 bildet einen im Wesentlichen schlauchförmigen Ausströmkanal 225 aus, der zwischen zwei einander gegenüber liegend angeordneten Materiallagen 221, 222 des Ausströmelementes gebildet ist. Der Ausströmkanal 225 wird unter Einwirkung des Innendrucks P₂ in der zweiten Kammer 12 zusammengedrückt, wenn der Innendruck P₂ größer als der Innendruck P₁ in der ersten Kammer 11 ist. Somit ermöglicht der Ausströmkanal 225 ein Ausströmen von Gas aus der ersten Kammer 11 in die zweite Kammer 12, wenn der Innendruck P₁ in der ersten Kammer größer ist als der Innendruck P₂ in der zweiten Kammer, während einem Überströmen von Gas aus der zweiten in die erste Kammer entgegengewirkt oder vollständig verhindert wird, wenn der Innendruck P₁ kleiner ist als der Innendruck P₂.

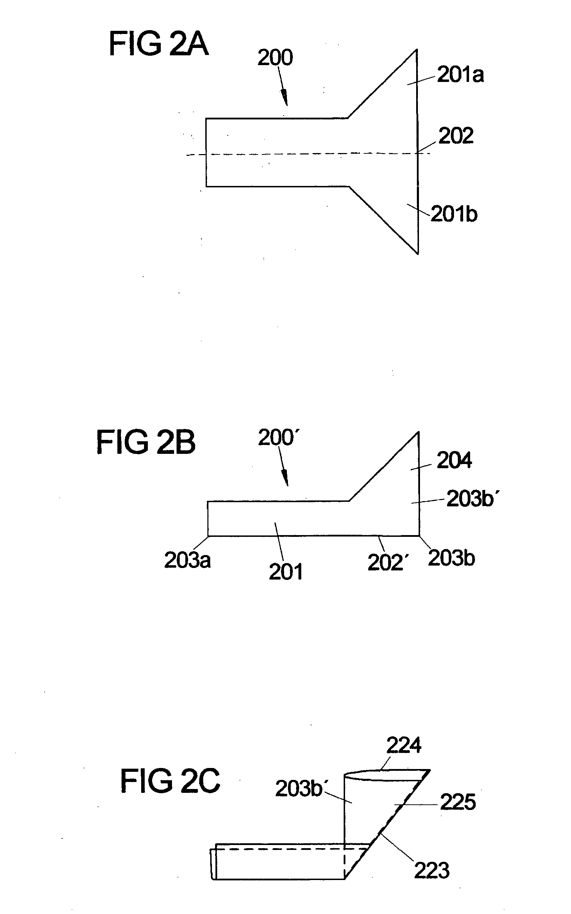

Der zweite Abschnitt 22 (d.h. insbesondere der Ausströmkanal 225) des Ausströmelementes 2 wird durch Einstülpen eines Abschnittes eines doppellagigen Materialstückes hergestellt (vgl. Fig. 2A bis 2C). Durch das Einstülpen entsteht der schlauchförmige Kanal 225, der an seinen entlang seiner Achse (der Strömungsrichtung) einander gegenüberliegende Ausströmöffnungen 223, 224 aufweist. Der Rand der ersten Ausströmöffnung 223 liegt in einer Ebene, die schräg zum ersten Abschnitt 21 und schräg zur Durchströmrichtung des durch den Ausströmkanal 22 strömenden Gases orientiert ist. Die zweite Ausströmöffnung 224 liegt hingegen in einer Ebene, die quer zur Kanalachse orientiert ist.

Um ein Zurückstülpen des eingestülpten Abschnittes, der den Ausströmkanal 225 bildet, in Richtung auf die erste Kammer 11 zu vermeiden, kann der zweite Abschnitt 22 zusätzlich an der ersten und/oder der zweiten Materiallage des Gassacks festgelegt sein, z.B. mittels einer Naht.

Der zweite Abschnitt 22 ist über die Naht 16, über die die erste Gassacklage 13 mit der zweiten Gassacklage verbunden ist, mit den beiden Gassacklagen vernäht. Zudem ist der zweite Abschnitt 22 im Bereich der zweiten Ausströmöffnung 224 über die Randnaht 15 sowohl mit der ersten als auch mit der zweiten Gassacklage des Gassacks 1 vernäht.

Die Figuren 1B und 1C zeigen den Gassack der Figur 1 A in einer Ansicht entlang des Pfeiles A in Fig. 1A, wobei Figur 1 B den Fall darstellt, dass der Druck in der ersten Kammer 11 höher ist als der Innendruck in der zweiten Kammer 12, so dass Gas aus der ersten Kammer in die zweite Kammer überströmt und sich dabei der Ausströmkanal 22 weitet.

Figur 1C zeigt den umgekehrten Fall, nämlich dass der Innendruck P₂ in der zweiten Kammer 12 größer ist der Innendruck P₁ in der ersten Kammer, so dass der Ausströmkanal 225 zusammengedrückt wird, wodurch sich der Ausströmquerschnitt verringert und der Gasfluss zwischen der ersten und der zweiten Kammer reduziert oder vollständig unterbunden wird.

Die Figuren 2A bis 2C zeigen ein Verfahren zur Herstellung des Ausströmelementes 2 der Figuren 1A bis 1C. Zunächst wird ein Ausgangsmaterialstück (z.B. in Form eines Materialzuschnittes) 200 bereitgestellt, das im Bereich des herzustellenden zweiten Abschnittes des Ausströmelementes dreieckige Sektionen 201 a, 201 b aufweist. Der Materialzuschnitt 200 wird entlang einer Faltlinie 202 umgefaltet oder zumindest umgebogen, so dass ein doppellagiges Materialstück 200' entsteht, das einen rechteckigen Grundbereich 201 aufweist, an den sich eine doppellagige dreieckige Sektion 204 anschließt. An den Enden der entlang der Faltlinie entstandenen Faltkante 202' befindet sich jeweils eine Ecke 203a, 203b.

Der an die Ecke 203b angrenzende Bereich 203b' des Materialstücks 200' wird so zwischen die beiden Lagen des umgefalteten Materialzuschnitts eingestülpt, dass der eingestülpte Bereich über den Grundbereich 201 hinaus steht und den Ausströmkanal 225. ausbildet, der eine erste Ausströmöffnung 224 und eine gegenüberliegend angeordnete zweite Ausströmöffnung 223 aufweist.

Es ist denkbar, dass auch der Bereich der zweiten Ecke 203a eingestülpt wird, um einen zweiten Ausströmkanal herzustellen. Des Weiteren ist die Erfindung selbstverständlich nicht auf die Verwendung eines wie in Fig. 2A gezeigten Ausgangszuschnitts beschränkt. Es können auch Zuschnitte mit anderer Geometrie verwendet werden, beispielweise ein näherungsweise rechteckiger Zuschnitt ohne die dreieckigen Ansätze 201a, 201b.

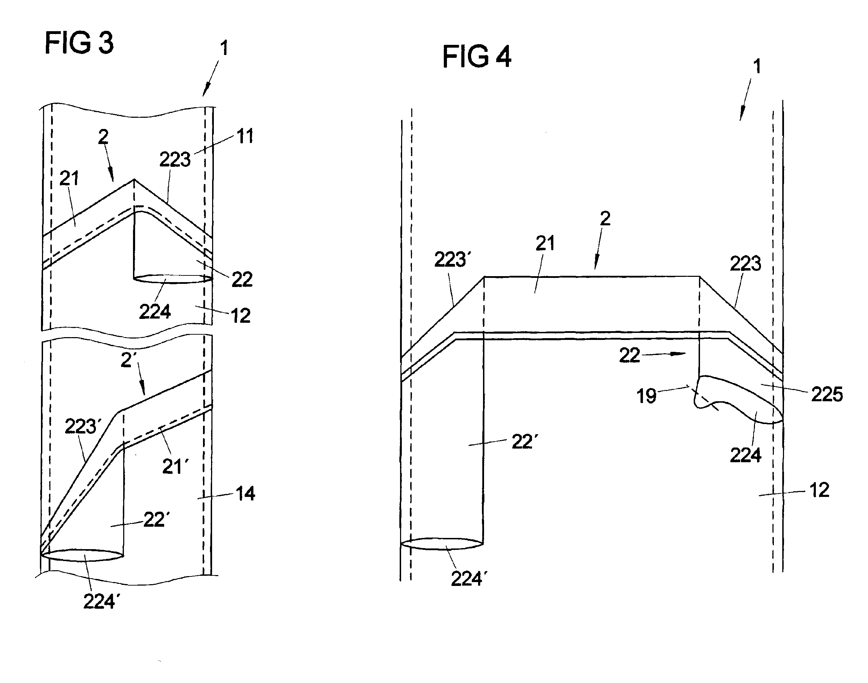

Figur 3 zeigt einen Ausschnitt aus einer weiteren Ausführungsform des erfindungsgemäßen Gassackes. Im Vergleich mit den Figuren 1A bis 1C sind zwei Ausströmelemente 2 und 2' angeordnet, wobei das Ausströmelement 2 ähnlich demjenigen der Figuren 1A bis 1C einen ersten Abschnitt 21 aufweist, der eine erste Kammer 11 von einer zweiten Kammer 12 des Gassacks trennt.

Das zweite Ausströmelement 2' trennt mit einem ersten Abschnitt 21' die zweite Kammer 12 von einer dritten Kammer 14 des Gassackes. Die Ausströmelemente 2, 2' weisen jeweils einen zweiten Abschnitt 22, 22' auf, der einen Ausströmkanal 22 bzw. 22' zwischen den benachbarten Kammern bildet. Die Ausströmelemente 2, 2' lassen sich insbesondere mit einem Verfahren gemäß in den Figuren 2A bis 2C herstellen.

Der Ausströmkanal 22 bzw. 22' ist in Figur 3 anders als in Figur 1A nicht senkrecht zu dem ersten Abschnitt 21 bzw. 21' angeordnet, sondern unter einem spitzen bzw. stumpfen Winkel. Der Winkel zwischen dem ersten Abschnitt und dem Ausströmkanal wird angepasst an die Erfordernisse gewählt. Zudem kann die Orientierung der Ausströmöffnungen 223, 224 bzw. 223', 224' insbesondere durch die Art des Einstülpens (vgl. Fig. 2A bis 2C) relativ zu dem Verlauf des ersten Abschnitts 21, 21' vorgegeben werden.

Figur 4 betrifft ein weiteres Ausführungsbeispiel des erfindungsgemäßen Gassacks. Das Ausströmelement 2 weist in dieser Variante zwei Ausströmkanäle 22, 22' auf, die sich an einander gegenüberliegenden Enden des ersten Abschnittes des bandartig gestalteten Ausströmelementes 2 anschließen. Der Ausströmkanal 225 ist über eine zusätzliche Naht 19 an einer der Gassacklagen des Gassackes fixiert.

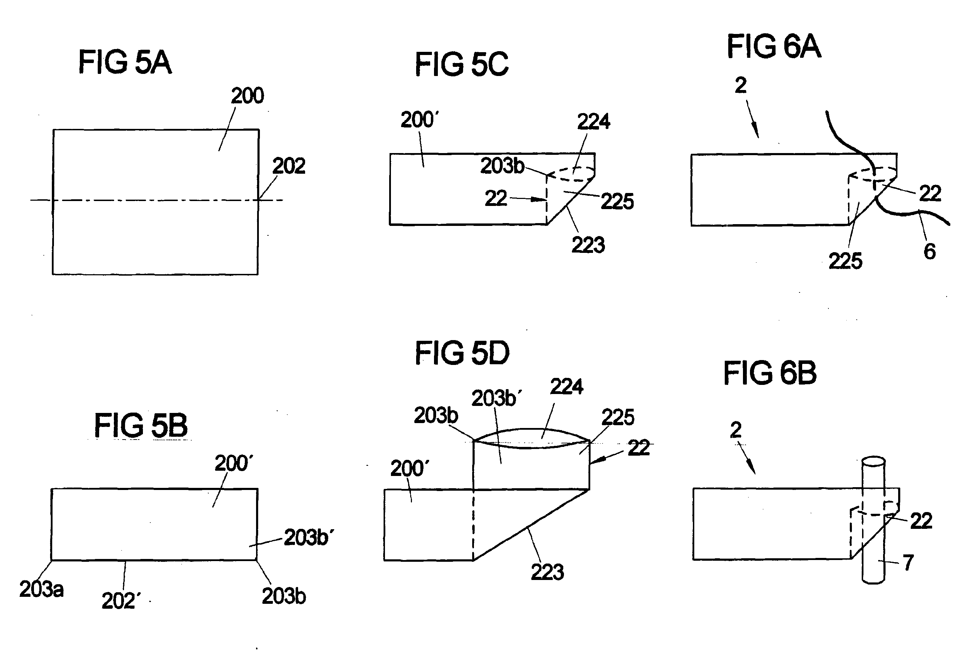

Die Figuren 5A bis 5D betreffen ein weiteres Herstellungsverfahren eines Ausströmelementes für einen erfindungsgemäßen Gassack. Zunächst wird ein Ausgangsmaterialstück 200 entlang einer Faltlinie 202 gefaltet, so dass ein doppellagiges, rechteckiges Materialstück 200' entsteht (Fig. 5B). Ein Bereich 203b' in Nähe der Ecke 203b des Materialstücks 200', die zwischen der entstandenen Faltkante 202' und einer kürzeren Seite des Materialstücks 200' liegt, wird zwischen die beiden Lagen des Materialstücks 200' eingestülpt.

Durch das Einstülpen des Bereiches 203b' um die Ecke 203b entsteht ein Ausströmkanal 225 mit einer ersten Ausströmöffnung 223 und einer zweiten Ausströmöffnung 224. Im Beispiel der Figur 5C wird der Bereich um die Ecke 203b nur so weit eingestülpt, dass der entstehende Ausströmkanal 225 nicht über das doppellagige Materialstück 200' hinaus ragt (d.h. der Ausströmkanal ist - in Strömungsrichtung betrachtet - kürzer als die kürzere Seite des rechteckigen Materialstücks 200').

Gemäß der Weiterbildung der Figur 5D wird der Bereich um die Ecke 203b soweit eingestülpt, dass der entstehende Ausströmkanal 225 über das Materialstück 200' hinaus ragt.

Die Figuren 6A und 6B zeigen eine Abwandlung, wonach durch den Ausströmkanal 225 des Ausströmelementes 2 ein Bestandteil eines Gassackmoduls (Kabel 6 in Figur 6A bzw. Gasgenerator 7 in Figur 6B) hindurchgeführt ist.

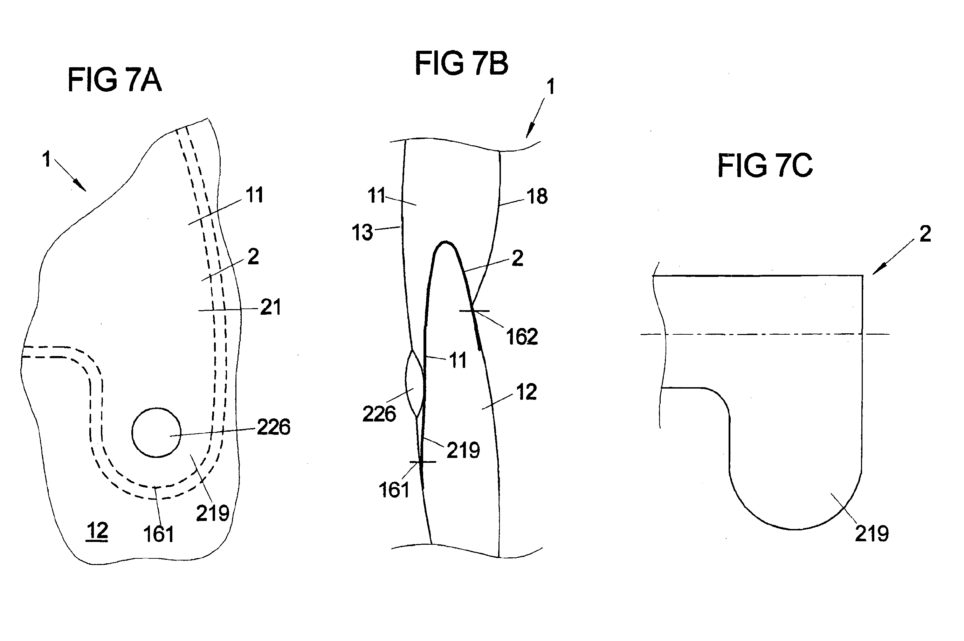

Die Figuren 7A bis 7B beziehen sich auf eine weitere Ausführungsform des erfindungsgemäßen Gassacks. Der Gassack weist wiederum einer erste und eine zweite Kammer 11, 12 sowie ein Ausströmelement in Form eines Bandes 2 auf. Fig. 7C zeigt das im Gassack 1 montierte Band 2.

Das Band 2 besitzt einen ersten Abschnitt 21, der die erste von der zweiten Kammer trennt sowie einen zweiten Abschnitt, der einen eingestülpten Abschnitt als Rückschlagventil aufweist. Der zweite Abschnitt ist in den Fig. 7A und 7B nicht dargestellt.

Der erste Abschnitt 21 des Bandes weist einen laschenartigen Fortsatz 219 auf, der sich in den Bereich einer Abströmöffnung (Venthole) 226 der ersten Kammer hinein erstreckt. Das Band 2 ist entlang einer ersten Seite mittels einer Naht 161 mit einer Gassacklage 13 verbunden, die in Fig. 7B dem Betrachter zugewandt angeordnet ist. Eine zweite Seite des Bandes ist über eine Naht 162 mit einer zweiten Lage 18 des Gassacks verbunden. Das Band 2 ist so ausgebildet und angeordnet, dass sich die zweite Kammer 12 mit einem Bereich benachbart zu der Lasche 219 des Bandes 2 und der Ausströmöffnung 226 erstreckt.

Ist der Druck in der zweiten Kammer 12 größer als der Druck in der ersten Kammer, wird durch Einwirken des Druckes in der zweiten Kammer die Lasche gegen die Innenseite der Gassacklage 13 gedrückt, so dass die Ausströmöffnung 226 verschlossen und ein Abströmen von Gas aus der ersten Kammer über die Ausströmöffnung 226 blockiert wird.

### Bezugszeichenliste

- 1: Gassack
- 2: Ausströmelement
- 6: Kabel
- 7: Gasgenerator
- 11: erste Kammer
- 12: zweite Kammer
- 13: erste Gassacklage
- 15, 16, 19: Naht
- 18: zweite Materiallage
- 21: erster Abschnitt
- 22: zweiter Abschnitt
- 23a, 23b: Längsseite
- 161, 162: Naht
- 200: Ausgangsmaterialstück
- 200': Materialstück
- 201: Grundbereich
- 201a, 201b: Sektion
- 202: Faltlinie
- 202': Faltkante
- 203a, 203b: Ecke
- 203b': Bereich
- 219: Lasche
- 221, 222: Materiallage
- 223, 224: Ausströmöffnung
- 225: Ausströmkanal
- 226: Abströmöffnung

## Patentansprüche

1. Gassack für ein Fahrzeuginsassen-Rückhaltesystem, mit
- einer ersten und einer zweiten Kammer (11, 12), die zum Schutz eines Fahrzeuginsassen aufblasbar sind;
- einem Ausströmelement (2) mit einem Ausströmkanal (225), über den das Gas aus der ersten Kammer (11) ausströmen kann, wenn der Innendruck in der ersten Kammer den Innendruck (P₁) in der zweiten Kammer (12) übersteigt, und der unter Einwirkung des Innendruckes (P₂) in der zweiten Kammer zusammengedrückt werden kann, so dass einem Ausströmen von Gas aus der zweiten Kammer (12) entgegengewirkt wird, wenn der Innendruck in der ersten Kammer (11) niedriger ist als der Innendruck in der zweiten Kammer,
**dadurch gekennzeichnet, dass**
das Ausströmelement ein doppellagiges Materialstück (200') aufweist und der Ausströmkanal (225) durch Einstülpen eines Abschnitts (203b') des Materialstücks zwischen die Materiallagen des Materialstücks gebildet ist.

2. Gassack nach Anspruch 1, **dadurch gekennzeichnet, dass** die erste und die zweite Kammer (11, 12) des Gassacks (1) durch mindestens eine Gassacklage (13, 18) begrenzt sind und das Ausströmelement (2) ein getrennt von der Gassacklage gefertigtes Element ist, das mit der Gassacklage verbunden ist.

3. Gassack nach Anspruch 1 oder 2, **dadurch gekennzeichnet, dass** das Ausströmelement (2) einen ersten Abschnitt (21), der die erste von der zweiten Kammer (11, 12) trennt, und einen zweiten Abschnitt (22), der den Ausströmkanal (225) aufweist, umfasst.

4. Gassack nach einem der vorhergehenden Ansprüche, **dadurch gekennzeichnet, dass** sich der Ausströmkanal (225) in die zweite Kammer (12) hinein erstreckt.

5. Gassack nach einem der vorhergehenden Ansprüche, **dadurch gekennzeichnet, dass** der Ausströmkanal (225) so ausgebildet und angeordnet ist, dass über ihn Gas aus der ersten Kammer (11) aus dem Gassack ausströmen kann.

6. Gassack nach einem der Ansprüche 1 bis 4, **dadurch gekennzeichnet, dass** der Ausströmkanal (225) so ausgebildet und angeordnet ist, dass über ihn Gas aus der ersten Kammer (11) in die zweite Kammer (12) überströmen kann.

7. Gassack nach einem der vorhergehenden Ansprüche, **dadurch gekennzeichnet, dass** das doppellagige Materialstück (200') eine Faltkante (202') aufweist und der Ausströmkanal (225) durch Einstülpen eines Bereiches (203b') um eine Ecke (203b), die sich zwischen an einem Ende der Faltkante (202') befindet, gebildet ist.

8. Gassack nach einem der vorhergehenden Ansprüche, **dadurch gekennzeichnet, dass**
- der Gassack eine erste und zweite Gassacklage (13, 18) aufweist, die die erste und die zweite Kammer (11, 12) begrenzen, und
- eine der Materiallagen des Materialstücks (200') mit der ersten Gassacklage (13) und die andere Materiallage des Materialstücks mit der zweiten Gassacklage (18) verbunden ist.

9. Gassack nach einem der vorhergehenden Ansprüche, **dadurch gekennzeichnet, dass** das Ausströmelement (2) einen dreieckigen Bereich aufweist, in dem sich der Ausströmkanal (225) erstreckt.

10. Gassack nach einem der vorhergehenden Ansprüche, **dadurch gekennzeichnet, dass** der Ausströmkanal (225) zwei Ausströmöffnungen (223, 224) aufweist, die sich entlang der Achse des Ausströmkanals einander gegenüber liegen, wobei die der ersten Kammer (11) zugewandte Ausströmöffnung (223) schräg zur Achse des Ausströmkanals (225) verläuft.

11. Gassack nach Anspruch 10, **dadurch gekennzeichnet, dass** die der ersten Kammer (11) zugewandte Ausströmöffnung (223) abgewinkelt zu einem ersten Abschnitt des Ausströmelementes verläuft, der die ersten von der zweiten Kammer trennt.

12. Gassack für ein Fahrzeuginsassen-Rückhaltesystem,
- einer ersten und einer zweiten Kammer (11, 12), die zum Schutz eines Fahrzeuginsassen aufblasbar sind;
- einem Ausströmelement (2), über das Gas aus der ersten Kammer ausströmen kann, wenn der Innendruck in der ersten Kammer den Innendruck in der zweiten Kammer übersteigt, und das ein Ausströmen von Gas aus der ersten Kammer blockiert, wenn der Innendruck in der ersten Kammer niedriger ist als der Innendruck in der zweiten Kammer,
**dadurch gekennzeichnet, dass**
das Ausströmelement (2) mit einem ersten Abschnitt (21) die erste von der zweiten Kammer trennt und mit einem zweiten Abschnitt (22) mindestens einen Ausströmkanal (225) bildet, der unter Einwirken des Innendrucks in der zweiten Kammer zusammengedrückt wird, wenn der Innendruck in der zweiten Kammer größer ist als der Innendruck in der ersten Kammer.

13. Gassack nach Anspruch 12, **dadurch gekennzeichnet, dass**
- der Gassack eine erste und eine zweite Gassacklage aufweist, die die erste und die zweite Kammer begrenzen, und
- der zweite Abschnitt des Ausströmelementes entlang zweier einander gegenüberliegender Seitenränder mit der Innenseite der ersten Gassacklage verbunden ist, so dass zwischen dem zweiten Abschnitt und der ersten Gassacklage der Ausströmkanal gebildet ist.

14. Verfahren zum Herstellen eines Gassacks für ein Fahrzeuginsassen-Rückhaltesystem, insbesondere gemäß einem der vorhergehenden Ansprüche, mit den Schritten:
- Bereitstellen mindestens einer Gassacklage (13, 18) zum Herstellen einer ersten und einer zweiten aufblasbaren Kammer (11, 12);
- Anordnen eines Ausströmelementes (2) an der Gassacklage (13, 18), das unter Einwirken des Innendrucks in der zweiten Kammer zusammengedrückt wird, wenn der Innendruck in der zweiten Kammer größer ist als der Innendruck in der ersten Kammer,
**dadurch gekennzeichnet, dass**
das Herstellen des Ausströmelementes (2) die folgenden Schritte umfasst:
- Bereitstellen eines doppellagigen Materialstücks (200');
- Einstülpen mindestens eines Abschnitts (203b') des Materialstücks (200') zwischen die beiden Materiallagen des Materialstücks (200'), um den Ausströmkanal (225) zu bilden.

15. Verfahren nach Anspruch 14, **dadurch gekennzeichnet, dass** das Herstellen des Ausströmelementes die folgenden Schritte umfasst:
- Falten eines Ausgangsmaterialstücks (200), so dass ein doppellagiges Materialstück (200'), entsteht, das der an den Enden der entlang der Faltlinie (202) entstandenen Faltkante (202') jeweils eine Ecke (203a, 203b) aufweist;
- Einstülpen mindestens eines Bereiches (203b'), der an eine der Ecken angrenzt, zwischen die beiden Materiallagen des doppellagigen Materialstücks (200').

## Claims

1. Airbag for a vehicle occupant restraint system with
- a first and a second chamber (11, 12), which can be inflated for the protection of a vehicle occupant;
- an outflow element (2) with an outflow duct (225) via which the gas can flow out of the first chamber (11), when the internal pressure in the first chamber exceeds the internal pressure (P₁) in the second chamber (12), and which can be compressed by the action of the internal pressure (P₂) in the second chamber such that an outflow of gas out of the second chamber (12) is counteracted, when the internal pressure in the first chamber (11) is lower than the internal pressure in the second chamber,
**characterized in that**
the outflow element has a two-layer material piece (200') and the outflow duct (225) is formed by folding in a section (203b') of the material piece between the material layers of the material piece.

2. Airbag according to claim 1, **characterized in that** the first and the second chamber (11, 12) of the airbag (1) are limited by at least one airbag layer (13, 18) and the outflow element (2) is an element manufactured separately from the airbag layer, wherein the element is connected to the airbag layer.

3. Airbag according to claim 1 or 2, **characterized in that** the outflow element (2) comprises a first section (21), which separates the first from the second chamber (11, 12) and a second section (22), which has the outflow duct (225).

4. Airbag according to anyone of the preceding claims, **characterized in that** the outflow duct (225) extends into the second chamber (12).

5. Airbag according to anyone of the preceding claims, **characterized in that** the outflow duct (225) is designed and arranged such that via said duct gas can flow from the first chamber (11) out of the airbag.

6. Airbag according to anyone of the claims 1 to 4, **characterized in that** the outflow duct (225) is designed and arranged such that via said duct gas can overflow from the first chamber (11) into the second chamber (12).

7. Airbag according to anyone of the preceding claims, **characterized in that** the two-layer material piece (200') has a folding edge (202') and the outflow duct (225) is formed by folding in a section (203b') over a corner (203b), which is between on one end off the folding edge (202').

8. Airbag according to anyone of the preceding claims, **characterized in that**
- the airbag has a first and a second airbag layer (13, 18), which delimit the first and the second chamber (11, 12), and
- one of the material layers of the material piece (200') is connected to the first airbag layer (13) and the other material layer of the material piece is connected to the second airbag layer (18).

9. Airbag according to anyone of the preceding claims, **characterized in that** the outflow element (2) comprises a triangular area, in which the outflow duct (225) extends.

10. Airbag according to anyone of the preceding claims, **characterized in that** the outflow duct (225) has two outflow openings (223, 224), which face each other along the axis of the outflow duct, wherein the outflow opening (223) facing the first chamber (11) continues inclined to the axis of the outflow duct (225).

11. Airbag according to claim 10, **characterized in that** the outflow opening (223) facing the first chamber (11) continues angular to a first section of the outflow element, which separates the first from the second chamber.

12. Airbag for a vehicle occupant restraint system with
- a first and a second chamber (11, 12) which can be inflated for the protection of a vehicle occupant;
- an outflow element (2) via which gas can flow out of the first chamber, when the internal pressure in the first chamber exceeds the internal pressure in the second chamber, and which blocks an outflow of gas from the first chamber, when the internal pressure in the first chamber is lower than the internal pressure in the second chamber,
**characterized in that**
the outflow element (2) separates with a first section (21) the first from the second chamber and forms with a second section (22) at least one outflow duct (225), which is compressed by the action of the internal pressure in the second chamber, when the internal pressure in the second chamber is larger than the internal pressure in the first chamber.

13. Airbag according to claim 12, **characterized in that**
- the airbag comprises a first and a second airbag layer, which delimit the first and the second chamber, and
- the second section of the outflow element is connected along two lateral edges facing each other to the internal side of the first airbag layer such that the outflow duct is formed between the second section and the first airbag layer.

14. Method for manufacturing an airbag for a vehicle occupant restraint system, in particular according to anyone of the preceding claims with the steps
- providing at least one airbag layer (13, 18) for manufacturing a first and a second inflatable chamber (11, 12);
- arranging an outflow element (2) on the airbag layer (13, 18), which is compressed due to the action of the internal pressure in the second chamber, when the internal pressure in the second chamber is larger than the internal pressure in the first chamber,
**characterized in that**
the manufacturing of the outflow element (2) comprises the following steps:
- providing a two-layer material piece (200');
- folding in of at least one section (203b') of the material piece (200') between the two material layers of the material piece (200') in order to form the outflow duct (225).

15. Method according to claim 14, **characterized in that** the manufacturing of the outflow element comprises the following steps:
- folding of a starting material piece (200) such that a two-layer material piece (200') is obtained, which comprises in each case a corner (203a, 203b) on the ends of the folding edge (202') obtained along the folding line (202);
- folding in of at least one portion (203b'), which is adjacent to one of the corners, between the two material layers of the two-layer material piece (200').

## Revendications

1. Sac gonflable pour un système de retenue de passager d'un véhicule avec
- une première et une seconde chambres (11, 12) qui peuvent être gonflées pour la protection d'un passager d'un véhicule ;
- un élément d'échappement (2) avec un canal d'échappement (225), par lequel le gaz peut s'échapper de la première chambre (11) lorsque la pression intérieure dans la première chambre dépasse la pression intérieure (P₁) dans la seconde chambre (12), et qui peut être comprimé sous l'effet de la pression intérieure (P₂) dans la seconde chambre de sorte à agir contre un échappement du gaz de la seconde chambre (12) lorsque la pression intérieure dans la première chambre (11) est inférieure à la pression intérieure dans la seconde chambre,
**caractérisé en ce que** l'élément d'échappement présente une pièce de matériau à double couche (200') et le canal d'échappement (225) est formé par retournement d'une portion (203b') de la pièce de matériau entre les couches de matériau de la pièce de matériau.

2. Sac gonflable selon la revendication 1, **caractérisé en ce que** la première et la seconde chambres (11, 12) du sac gonflable (1) sont délimitées par au moins une couche de sac gonflable (13, 18) et l'élément d'échappement (2) est un élément fabriqué séparément de la couche de sac gonflable et est relié à cette dernière.

3. Sac gonflable selon la revendication 1 ou 2, **caractérisé en ce que** l'élément d'échappement (2) comporte une première portion (21) qui sépare la première chambre de la seconde chambre (11, 12), et une seconde portion (22) qui présente le canal d'échappement (225).

4. Sac gonflable selon l'une quelconque des revendications précédentes, **caractérisé en ce que** le canal d'échappement (225) s'étend dans la seconde chambre (12).

5. Sac gonflable selon l'une quelconque des revendications précédentes, **caractérisé en ce que** le canal d'échappement (225) est réalisé et disposé de sorte que du gaz de la première chambre (11) puisse sortir par celui-ci du sac gonflable.

6. Sac gonflable selon l'une quelconque des revendications 1 à 4, **caractérisé en ce que** le canal d'échappement (225) est réalisé et disposé de sorte que du gaz de la première chambre (11) puisse se répandre par celui-ci dans la seconde chambre (12).

7. Sac gonflable selon l'une quelconque des revendications précédentes, **caractérisé en ce que** la pièce de matériau à double couche (200') présente une arête de pliage (202') et le canal d'échappement (225) est formé par retournement d'une zone (203b') autour d'un coin (203b) qui se trouve sur une extrémité de l'arête de pliage (202').

8. Sac gonflable selon l'une quelconque des revendications précédentes, **caractérisé en ce que**
- le sac gonflable présente une première et une seconde couches de sac gonflable (13, 18) qui délimitent la première et la seconde chambres (11, 12), et
- l'une des couches de matériau de la pièce de matériau (200') est reliée à la première couche de sac gonflable (13) et l'autre couche de matériau de la pièce de matériau est reliée à la seconde couche de sac gonflable (18).

9. Sac gonflable selon l'une quelconque des revendications précédentes, **caractérisé en ce que** l'élément d'échappement (2) présente une zone triangulaire, dans laquelle s'étend le canal d'échappement (225).

10. Sac gonflable selon l'une quelconque des revendications précédentes, **caractérisé en ce que** le canal d'échappement (225) présente deux ouvertures d'échappement (223, 224) qui se situent à l'opposé l'une de l'autre le long de l'axe du canal d'échappement, l'ouverture d'échappement (223) tournée vers la première chambre (11) s'étendant en biais par rapport à l'axe du canal d'échappement (225).

11. Sac gonflable selon la revendication 10, **caractérisé en ce que** l'ouverture d'échappement (223) tournée vers la première chambre (11) s'étend en formant un angle avec une première portion de l'élément d'échappement qui sépare la première chambre de la seconde chambre.

12. Sac gonflable pour un système de retenue de passager d'un véhicule, avec
- une première et une seconde chambres (11, 12) qui peuvent être gonflées pour la protection d'un passager d'un véhicule ;
- un élément d'échappement (2), par lequel du gaz peut s'échapper de la première chambre lorsque la pression intérieure dans la première chambre dépasse la pression intérieure dans la seconde chambre, et qui bloque un échappement du gaz de la première chambre lorsque la pression intérieure dans la première chambre est inférieure à la pression intérieure dans la seconde chambre,
**caractérisé en ce que** l'élément d'échappement (2) avec une première portion (21) sépare la première chambre de la seconde chambre et avec une seconde portion (22) forme au moins un canal d'échappement (225) qui est comprimé sous l'effet de la pression intérieure dans la seconde chambre lorsque la pression intérieure dans la seconde chambre est supérieure à la pression intérieure dans la première chambre.

13. Sac gonflable selon la revendication 12, **caractérisé en ce que**
- le sac gonflable présente une première et une seconde couches de sac gonflable qui délimitent la première et la seconde chambres et
- la seconde portion de l'élément d'échappement est reliée le long de deux bords latéraux opposés au côté intérieur de la première couche de sac gonflable de sorte que le canal d'échappement soit formé entre la seconde portion et la première couche de sac gonflable.

14. Procédé de fabrication d'un sac gonflable pour un système de retenue de passager d'un véhicule, en particulier selon l'une quelconque des revendications précédentes, avec les étapes :
- de mise à disposition d'au moins un sac gonflable (13, 18) pour la fabrication d'une première et d'une seconde chambres (11, 12) qui peuvent être gonflées ;
- de disposition d'un élément d'échappement (2) sur le sac gonflable (13, 18) qui est comprimé sous l'effet de la pression intérieure dans la seconde chambre lorsque la pression intérieure dans la seconde chambre est supérieure à la pression intérieure dans la première chambre,
**caractérisé en ce que** la fabrication de l'élément d'échappement (2) comprend les étapes suivantes :
- mise à disposition d'une pièce de matériau à double couche (200') ;
- retournement d'au moins une portion (203b') de la pièce de matériau (200') entre les deux couches de matériau de la pièce de matériau (200') afin de former le canal d'échappement (225).

15. Procédé selon la revendication 14, **caractérisé en ce que** la fabrication de l'élément d'échappement comporte les étapes suivantes :
- pliage d'une pièce de matériau de départ (200) de sorte qu'une pièce de matériau à double couche (200') apparaisse, laquelle présente sur les extrémités de l'arête de pliage (202') apparue le long de la ligne de pliage (202) respectivement un coin (203a, 203b) ;
- retournement au moins d'une zone (203b') qui est contigüe à l'un des coins, entre les deux couches de matériau de la pièce de matériau à double couche (200').
